# EUROPEAN PATENT APPLICATION

(11) **EP 1 457 381 A2**
(43) Date of publication of application: **15.09.2004**
(21) Application number: 04251427.3
(22) Date of filing: 12.03.2004
(51) Int. Cl.: B60P 1/28

(54) **Commercial vehicle**

(30) Priority: 14.03.2003 GB 0305979
(71) Applicant: Ingimex Ltd., Telford, Shropshire TF7 4QT (GB)
(72) Inventor: Gallen, Jeremy Martin, Ironbridge Telford Shropshire TF8 7NY (GB)
(74) Representative: Mosey, Stephen George

(57) **Abstract**

A commercial vehicle body comprises a load deck (11) pivotally tippable relative to a sub-frame (12) which is intended to be secured to a chassis of a vehicle cab and chassis assembly. The load deck includes an upstanding headboard (48) to which the vertical limb of an L-shaped structural member (49) is secured, the horizontal limb of the structural member extending beneath the load platform and being secured thereto. The use of such structural members can also apply to a non-pivotting load deck. The load deck pivots on the sub-frame by means of bearing assemblies (22-26) received on respective ends (21) of a cross member (15) protruding at respective opposite sides of a pair of parallel spaced main longitudinal beams (14) of the sub-frame. A lifting mechanism (13) between the sub-frame and the load deck has at its upper end a horizontally pivoted cylindrical component which is retained in a groove (35) in a cross-member (19a) to connect the mechanism (13) to the load deck.

## Description

This invention relates to commercial vehicles of the kind which are usually referred to as goods vehicles and in particular relates to a tipper body for a goods vehicle.

Goods vehicles are customarily manufactured in the form of a cab and chassis assembly so that a number of different alternative forms of load carrying body can be attached to the chassis to facilitate the production of a range of different goods vehicles based upon a common cab and chassis assembly. In general the load carrying bodies which can be attached to the chassis of a cab and chassis assembly fall into three different categories; "fixed bed" in which a fixed load platform is secured to the chassis and may if desired have hinged side panels usually called "drop sides"; a "box van" body in which a closable container is attached to the chassis; and, a "tipper" body in which a load platform carried by the cab and chassis assembly can be pivoted relative thereto to discharge, under the action of gravity, loads supported on the platform. The present invention is concerned particularly, but not exclusively, with tipper bodies.

Conventionally a tipper body for attachment to a cab and chassis assembly comprises a sub-frame which is secured to the chassis and a load platform, or load deck, which is pivotally connected to the sub-frame and is moveable relative thereto by an hydraulic lift mechanism. Frequently such tipper bodies are manufactured individually in relation to each cab and chassis assembly even though each cab and chassis assembly within a particular model designation is ostensibly identical to all of the others within that model designation. As a result assembly and service work in relation to such tipper bodies needs to be done individually. It is an object of the present invention to provide a tipper body which can readily be adapted to a range of cab and chassis assemblies.

Conventionally the pivotal mounting of the load platform of the tipper body to the sub-frame of the body is by way of a pair of laterally spaced bearings, the positioning of the bearings being determined in part by the constraints imposed by the mounting of the sub-frame to the chassis of the cab and chassis assembly. These constraints can result in the requirement to design the structure of the load platform to accommodate a pivot connection arrangement determined by the chassis of the cab and chassis assembly to which the body is to be fitted, whereas it is more economic to manufacture a common load platform for a range of different chassis types. Moreover, in some assemblies, such constraints can lead to an inadequate lateral spacing of the bearings, with an attendant risk of a less than optimal distribution of the load of the load platform and the goods carried thereby, to the bearings and some lateral instability in the mounting of the load platform on the cab and chassis assembly. It is a further object of the present invention to provide a tipper body in which these disadvantages can be minimised or obviated.

There is a requirement that the headboard of the load platform of a goods vehicle, that is to say the upright load limiting structure at the cab end of the load platform, shall be able to accommodate certain pre-specified forces arising, for example, in a heavy braking or frontal crash situation in which the load on the load platform tends to move towards the vehicle cab. It is a further object of the present invention to provide a headboard assembly capable of complying with all current requirements, in a simple and convenient form.

Further objects and advantages of the inventive assembly will become apparent from the following drawings and the description.

According to a first aspect of the invention, there is provided a body for attachment to a vehicle cab and chassis assembly, the body comprising a load deck having its end nearest the cab, in use, in the form of an upstanding headboard, the headboard incorporating a first part of at least one structural member, said first part extending downwardly of the headboard to a lowermost part thereof, from which a further part of said at least one structural member extends underneath said load deck.

According to a second aspect of the invention, there is provided a body for attachment to a vehicle cab and chassis assembly, the body comprising a sub-frame, for securement to the chassis, in use, and a load deck tippable, in use, relative to the sub-frame, about pivot means, the sub-frame including a pair of spaced longitudinal members interconnected by respective front and rear cross-members, the rear cross-member extending through said longitudinal members with its respective opposite ends protruding therebeyond, and said pivot means being provided by respective bearing assemblies fitted to said respective protruding ends and connected directly or indirectly to said load deck.

According to a third aspect of the invention, there is provided a body for attachment to a vehicle cab and chassis assembly, the body comprising a sub-frame, for securement to the chassis, in use, a load deck tippable, in use, relative to the sub-frame, about pivot means, and a lifting mechanism connected between the sub-frame and the load deck to effect said tipping, in use, the connection of the lifting mechanism to the load deck being by way of a horizontally pivoted member of the lifting mechanism being retained in a recess or groove in part of the load deck.

Various aspects of the present invention will now be described with reference to the accompanying drawings wherein:-
Figure 1 is a diagrammatic perspective view of a tipper body for a light goods vehicle;
Figures 2, 3 and 4 are respectively detail enlargements of parts of Figure 1;
Figure 5 is a further view of buffer components shown in Figure 2, but to an enlarged scale;
Figure 6 is an inverted view of the tipper body of Figure 1;
Figures 7 and 8 are enlargements of parts of Figure 6;
Figure 9 is an exploded perspective view of some of the components in Figure 7 to an enlarged scale;
Figure 10 is an exploded perspective view of a lift mechanism of the tipper body;
Figure 11 is an exploded perspective view of a headboard assembly of the tipper body;
Figure 12 is a perspective view of part of the mechanism of Figure 10, and;
Figure 13 is a cross-sectional view on the line 13 - 13 in Figure 12.

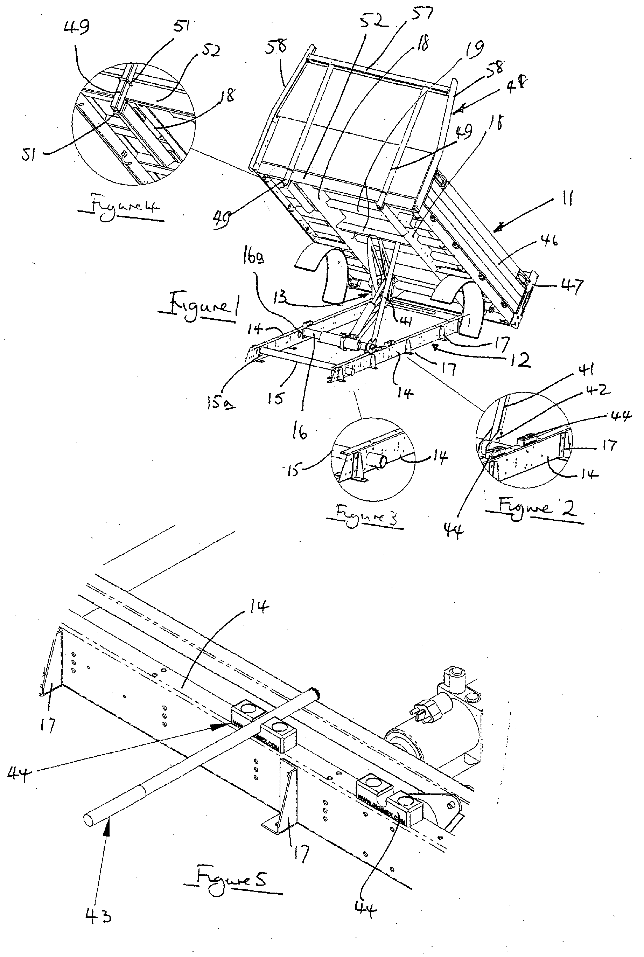

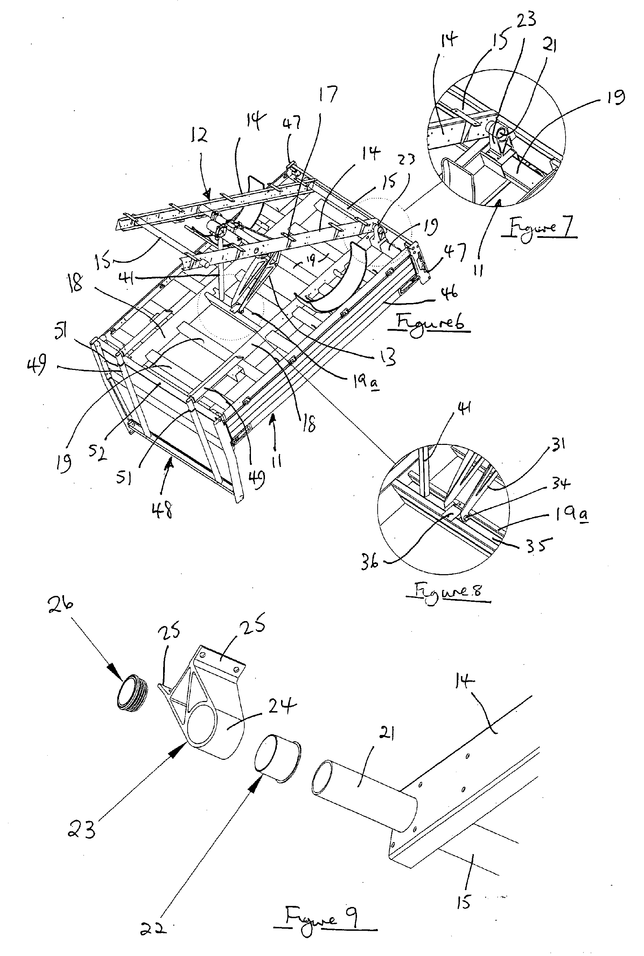

Referring to the drawings, the tipper body comprises a drop-side load platform 11 and a sub-frame 12, the platform 11 being pivotally mounted to the sub-frame 12 for movement about an axis which, in use, will be transverse to the length of the goods vehicle utilising the tipper body, and will be adjacent the rear of the vehicle. In use the sub-frame 12 is rigidly secured to the chassis of a separately manufactured cab and chassis assembly and an hydraulic lift mechanism 13 is interposed between the sub-frame 12 and the platform 11 to permit tipping of the platform 11 relative to the sub-frame 12 and the remainder of the vehicle to which the sub-frame 12 is secured.

The sub-frame 12 comprises first and second elongate pressed or rolled steel beams 14 which are arranged parallel to one another and which, in use, are spaced apart by a distance governed by the spacing of corresponding longitudinal structural members of the chassis of the cab and chassis assembly to which the tipper body is to be assembled. The chassis dimensions of a particular cab and chassis model will be known in advance, and modern vehicle manufacturing techniques ensure that these dimensions will be consistent, within predetermined close tolerances, for every example of that model of cab and chassis assembly which is supplied by the vehicle manufacturer. For different cab and chassis models within a particular manufacturer's range, and for the cab and chassis assemblies of different manufacturers, these chassis dimensions will be known in advance.

The sub-frame 12 also includes front and rear cross-members 15 in the form of elongate steel tubes of circular cross-section. The members 15 are manufactured to correspond to a particular chassis type in that they are cut to a length which is appropriate, and are provided with location or anchor plates 15a welded along the length of the cut tube at a predetermined spacing from one another. In use the ends of the tubes 15 are inserted through corresponding apertures in the beams 14 and the beams 14 are moved towards one another until their inner faces engage the plates 15a whereupon the plates are secured to the beams 14 with bolts. By virtue of the spacing of the plates 15a on the tubes 15 the beams 14 are positioned parallel and spaced apart by a distance suited to the chassis of the cab and chassis assembly with which the tipper body is to be associated. Desirably there will be an intermediate tubular cross-member 16 also cut to an appropriate length and having end plates 16a bolted to the beams 14. The intermediate cross-member 16 will not necessarily extend through the beams 14 although it could be the same as the members 15 if desired. The bolted together assembly of beams 14 and tubes 15 produces a rigid sub-frame assembly 12 which, by virtue of the predetermined positioning of the plates 15a on the cross-tubes 15 will fit a predetermined range of chassis.

In use the sub-frame 12 is secured to the respective chassis by a plurality of preformed brackets 17 which are bolted to the beams 14 at one end and bolted to the structural members of the vehicle chassis at their other ends. The beams 14 are predrilled with a number of predetermined alternative fixing holes for the brackets 17 so that common beams 14 can be used for a range of different sub-frames to suit a range of different vehicles chassis. It will be recognised that the facility to use common beams 14 for a large range of different sub-frames, the ability to use pre-constructed cross-members 15, 15a, and the facility to mount brackets 17 in alternative positions on the beams 14, allows a wide range of sub-frames 12 to be constructed from a minimum inventory of individual components thereby minimising the number of different components which must be manufactured and stored to accommodate a range of vehicles

A further significant advantage of bolting components together to form the sub-frame is that the components can each individually be provided with a protective surface coating, for example, paint, galvanising, powder coating, and the like prior to assembly of the components together, and the assembly step will not damage this coating. It will be recognised that if individual components are coated before welding, then the welding operation will damage or destroy the coating in some areas either leaving the sub-frame open to corrosion, or alternatively necessitating recoating of the whole assembled sub-frame.

The load platform 11 comprises a sheet steel deck supported on a lattice consisting of first and second main longitudinal members 18 which, in use, are parallel to the beams 14 of the sub-frame 12, and a plurality of elongate transverse members 19. The members 18 and 19 are conveniently formed as mild-steel pressings or by cold roll forming. In order to minimise the overall height of the load platform 11, and to ensure a rigid deck supporting lattice structure, the two main longitudinal members 18 are castellated to accommodate the transverse members 19 at least in part within the overall height of the longitudinal members 18, and the longitudinal members 18, the transverse members 19 and the deck are secured together by welding.

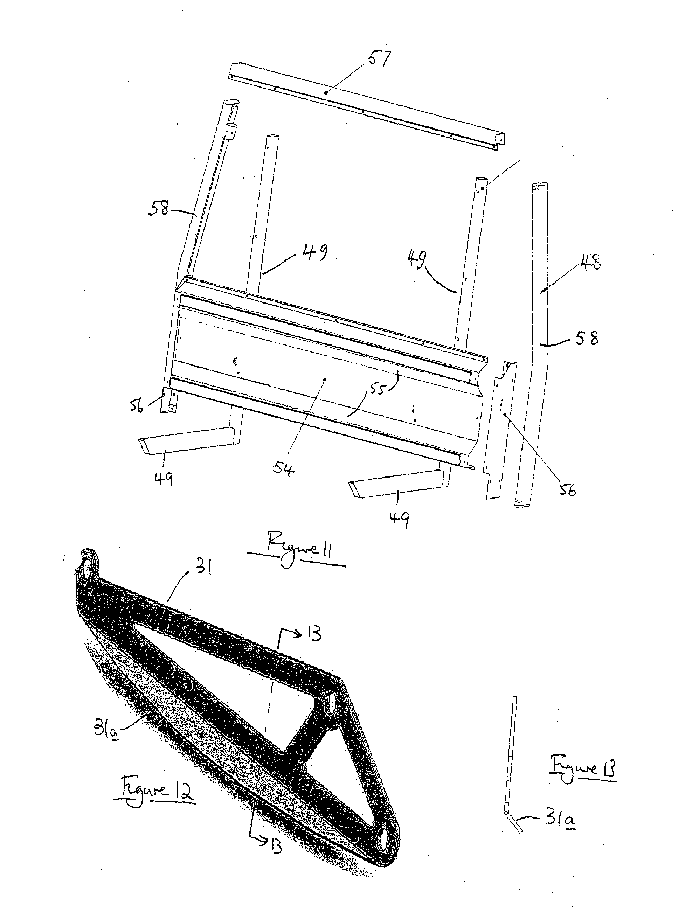

It will be recalled that the tubes 15 of the sub-frame 11 protrude through apertures provided in the beams 14 of the sub-frame. Figures 6, 7 and 9 illustrate the use of the protruding ends of the rear tube 15 to define the pivot axis of the load platform 11 on the sub-frame 12. In Figure 9 the protruding end region at one end of the rear tube 15 is identified by the reference numeral 21 and it will be appreciated that an exactly similar arrangement is provided at the opposite end of that tube 15. A bearing sleeve 22 formed from any convenient synthetic resin material is engaged over the protruding end 21 of the tube 15 and seats within a hollow, part-cylindrical boss 24 of a metal bracket 23 to form a bearing assembly. The metal bracket 23 is formed from a length of a material cut from an elongate aluminium extrusion and includes the hollow, part-cylindrical boss 24 and integral therewith first and second securing flanges 25. The boss 24 of each bracket 23 has a passage of circular cross-section extending therethrough, the passage being dimensioned to receive the sleeve 22 which in turn is dimensioned to receive the end region 21 of the tube 15. The flanges 25 of each bracket 23 are arranged to cooperate with, and be bolted to, a transverse member 19 of the platform 11 normally one which is at or adjacent the end thereof which is remote from the vehicle cab, in use. In an alternative embodiment, the brackets 23 are fabricated in steel.

After assembly of the load platform 11 and the sub-frame 12, the sub-frame 12 is offered to the underside of the load platform with the sleeves 22 and brackets 23 in position on the projecting ends 21 of the rear cross-tube 15. The brackets 23 are then rotated so that their flanges 25 cooperate with respective fixing brackets laterally abutting the respective members 18 and secured to a selected transverse member 19 at an end of the load platform. The flanges are then bolted to the fixing brackets, as shown for one such fixing bracket in Figure 7. Alternatively the flanges could be directly bolted to the member 19. Conveniently the sleeve 22 is a press-fit within the boss 24 of its respective bracket, but is a sliding fit on the projecting end 21 of the tube 15. In this way the lateral spacing of the brackets 23 can be adjusted prior to bolting the flanges 25 of the brackets 23 to the transverse member 19 of the load platform 11. A moulded synthetic resin end cap 26 can then be introduced into the outer end of the tube 15 to minimise the ingress of dirt and other foreign matter.

It will be recognised that the end regions 21 of the tube 15 can protrude by a significant amount beyond the outer faces of the corresponding beams 14 and the brackets 23 mount to an elongate transverse member 19 of the platform 11. Thus the transverse spacing between the brackets 23 is not governed by the spacing of the beams 14 from one another. It follows therefore that the spacing of the pivot points defined by the brackets 23 can be optimised in relation to load distribution and transverse stability of the load platform on the sub-frame 12 without being constrained by the spacing of the beams 14 of the sub-frame. Moreover the divorcing of the bracket position from the spacing of the beams 14 permits the design of a load platform which can be common to a plurality of different cab and chassis assemblies.

It will be recognised that since it is more convenient to manufacture two identical cross-tubes 15 than to provide different cross-tubes for the front and rear ends of the sub-frame, the ends 21 of the front cross-tube 15 of the sub-frame 12 also protrude through the beams 14. The protruding ends 21 of the front tube 15 act as stops or supports against which the front end of the platform 11 abuts in the rest (lowered) condition of the tipper body.

The rear cross-tube 15 defines the transverse pivot axis about which the load platform 11 can be tipped relative to the sub-frame 12 and the vehicle chassis in use, to discharge loads carried on the load platform. The hydraulic lifting arrangement 13 which is interposed between the sub-frame 12 and the load platform 11 to lift and lower the platform 11 relative to the sub-frame 12 is in the form of an hydraulically actuated scissor mechanism best seen in Figure 10 of the accompanying drawings. It will be recalled that there is an intermediate cross-member 16 in the construction of the sub-frame 12. The cross-tube 16 provides a convenient anchor point for one end of the scissor lift mechanism 13. The scissor lift mechanism includes a lower limb 28 defined by two interconnected parallel pressed metal strips pivotally connected at one end to a bracket arrangement 29 clamped onto or welded to the member 16. The limb 28 pivots relative to the bracket 29 about an axis parallel to but spaced from the axis of the member 16. At its opposite end the limb 28 is pivotally connected to an upper limb 31 of the mechanism 13, the upper limb 31 being defined by a pair of interconnected, spaced, parallel, identical metal pressings. The limb 28 is pivotally connected to the limb 29 for movement about an axis parallel to the axis of the tubular member 16 by means of a transversely extending pivot pin 32.

At its end remote from the limb 28, the limb 31 is pivotally connected to a moulded synthetic resin bearer block 33 by means of a transversely extending pivot pin 34 parallel to the axis of the member 16. The moulded block 33 has two outer faces extending at an angle to one another so that the block tapers in thickness. The tapering region of the block 33 is arranged to be received within a transversely extending groove 35 defined within an appropriately positioned transverse member 19a or localised bracket of the load platform 11. The cross-sectional shape of the groove 35 corresponds to the cross-sectional shape of the block 33 so that the tapering block can seat between corresponding walls of the groove 35. Thereafter a locking plate 36 is positioned behind the block 33 and is bolted to the transverse or cross-member 19a to retain the block 33 in the groove 35, the plate 36 seating within a recess 33a in the block 33 so that the plate 36 locates the block relative to the cross member 19a in the directions of both the depth and the length of the groove 35 of the member 19a.

In an alternative, improved arrangement, the block 33 is replaced by a cylindrical component. This functions in the same manner, however, as the block, in that it sits in the groove 35 or equivalent, and is clamped in place by a bridging piece or locking plate, like the plate 36. With the wedge shaped block 33, it must be orientated in a particular manner in order to fit into the groove 35. This necessitates a workman working underneath the load platform 11 on a partially raised condition, and is considered to be dangerous. With a cylindrical component, the orientation of it around the axis of its pivot pin is of course irrelevant. It can thus be received in the groove 35 and the scissor lift mechanism itself can be used to provide support for the tilted load platform 11 to allow the workman access to insert the bolts to hold the locking plate. It will be appreciated that instead of a continuous groove, the cylindrical component, or indeed the block 33, could be received in a (discrete) recess in the underside of the member 19a.

An hydraulic ram 37 is pivotally connected at one end to the bracket 29 and at its opposite end to the limb 31 intermediate the ends of the limb 31. It can be seen in Figure 10 that the end of the ram 37 connected to the limb 31 is connected thereto by means of a transversely extending pivot pin 38 parallel to the pivot pins 32 and 34 and positioned significantly closer to the pivot pin 32 than to the pivot pin 34. It will be recognised that when hydraulic fluid under pressured is admitted to the ram 37 the ram 37 will extend pivoting the mechanism 13 about the pivot axes 34, 32, and the connection between the limb 28 and the bracket 29, to raise the platform 11 about the axis of the rear tube 15 relative to the sub-frame 12 and the chassis of the vehicle. Similarly, as the hydraulic pressure in the ram 37 is released the ram 37 can retract as the mechanism 13 collapses back towards the rest position under the weight of the load platform 11.

As is apparent from Figures 12 and 13 each of the two pressings constituting the limb 31 is formed from relatively thin plate steel which is laser cut to shape before being pressed to define a longitudinally extending, integral, strengthening flange 31a along its lower edge which resists buckling and bending of the plate material under the lifting loads imposed thereon when tipping the platform 11. The use of laser cutting facilitates the formation of D-shaped apertures for receiving correspondingly non-circular end regions of pivot pins 32, 34, 38, whereby rotation of the metal to metal interface of the pins and the limb 31 is resisted. It is to be understood however that such shaping can be provided by other manufacturing techniques.

Conveniently an assembly 39 consisting of an electric motor, an hydraulic pump driven by the electric motor, an hydraulic fluid reservoir, and connecting pipes coupling the reservoir to the pump and the pump to the ram 37, is carried from the bracket 29 which forms the connection of the scissor of mechanism 13 with the tube 16 of the sub-frame. If desired therefore the hydraulic lifting arrangement can be supplied as a single unit which simply needs to be clamped to the tube 16 at one end, and to the transverse member 19a of the load platform 11 at its other end. It will further be recognised that since the block 33 or cylindrical component is received in a transverse groove 35 then, within predetermined limits, it can find its own position along the length of the groove 35 prior to the block 33 or cylindrical component being secured to the transverse member 19 by the locking plate 36. The ram 37 can incorporate a damping arrangement which controls the rate of retraction of the ram, particularly as the ram approaches its fully retracted condition, to control the rate at which the platform 11 collapses to its rest position.

It will be recognised that when the load platform 11 is in an elevated position relative to the sub-frame 12 it can be held in that position by maintaining fluid pressure in the ram 37. However, it is generally considered unsafe to rely solely upon the ram 37 to maintain the load platform in a raised position, and for safety purposes it is normal to incorporate a hinged prop 41 pivotally secured to the tube 16 by way of a bracket 42 clamped or welded around the tube 16, and engageable at its opposite end in the channel 35, or a purpose built receiver, on the load platform 11. After the load platform 11 has been elevated, the prop is manually swung into position about the bracket 42 and the pressure in the ram 37 is then relieved slightly to allow the free end of the prop 42 to engage the appropriate receiving surface on the underside of the platform 11. It will be recognised that once the prop 41 is in place the load platform cannot return to its rest, collapsed position irrespective of loss of pressure in the ram 37.

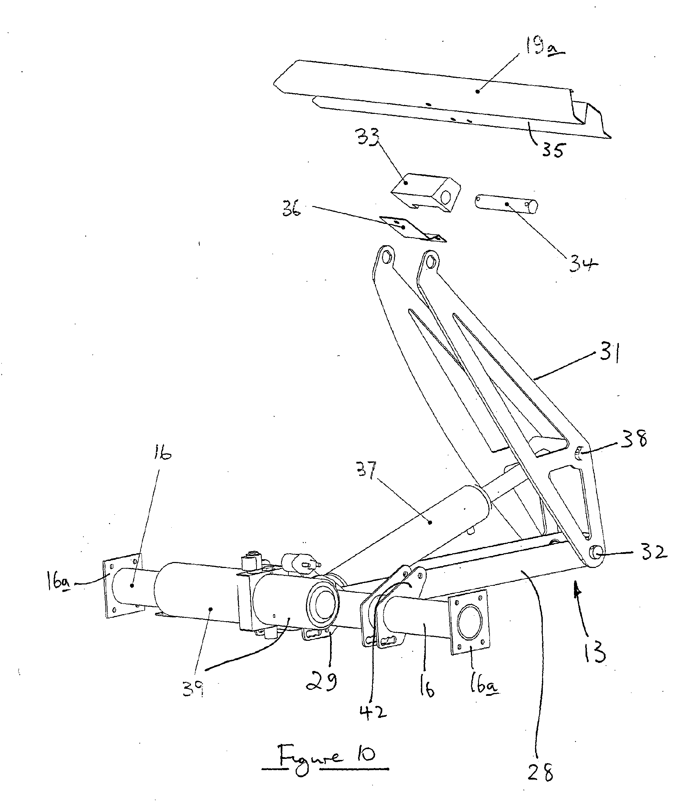

For convenience of handling, the prop 41 normally includes a transversely extending handle 43 (Figure 5) which, in the lowered, rest position of the prop 41, is clipped into a groove in a rubber buffer block 44 secured to an upper face of one of the beams 14 of the sub-frame 12. The reception of the handle 43 in the groove of the rubber block 44 prevents the metal handle 43 rattling against the metal beam 14 or the underside of the platform 11 in use. Furthermore, additional similar rubber buffer blocks 44 are positioned on the upper surfaces of the beams 14 of the sub-frame 12 to be engaged by the underside of the main longitudinal members 18 of the load platform 11 in the lowered position of the load platform 11 relative to the sub-frame 12. The buffer blocks are positioned to accommodate loads imposed upon the platform 11 if the lowered platform 11 deflects in use, so that those loads are transmitted to the sub-frame 12, and through the sub-frame 12 to the vehicle chassis minimising the risk of damaging deflection of the load platform 11 in use.

The load platform 11 can, as shown, have upstanding sidewalls. The two longitudinally extending sidewalls 46 can be hinged at their lower edges to constitute "drop-sides" in known manner. The rear-most end of the platform 11 can have at its opposite corners, upstanding posts 47 to which the rear wall of the load platform is hinged about an axis passing adjacent the upper edge of the rear wall whereby the rear wall can be released to swing outwardly as the platform is tipped to allow load on the platform to be discharged beneath the rear wall as the platform tips. The forward end wall of the load platform is defined by a bulkhead or "headboard" assembly 48 which is required, under existing regulations, to meet certain safety criteria.

The headboard assembly 48 is required to accept forces imposed thereon by a load on the platform 11 in a situation of heavy braking or a frontal crash of the vehicle. The headboard assembly must be able to protect the cab of the vehicle, to which it is closely adjacent, in such situations. In the construction illustrated in the accompanying drawings, the headboard assembly 48 comprises first and second substantially identical, L-shaped, tubular steel structural members 49 anchored, for example, by means of a plurality of U-shaped clamping bolts 51. The lower limb of each member 49 is fixed to a transverse member 19 either directly or via an interposed bracket, so that the limb transmits load to the load bearing structure of the load platform. The upper limb of each member is fixed, preferably directly, to a front cross-member 52 of the load platform 11. Thus with the load platform 11 horizontal, each of the members 49 has one limb extending vertically at the front end of the load platform adjacent the cab of the vehicle and its other limb extending horizontally beneath the load platform. The members 49 are anchored directly to main structural members of the platform 11 and thus loads imposed on the members 49 are transmitted directly back into the main structure of the platform 11. Moreover in the lowered condition of the platform 11 the undersides of the horizontal limbs of the members 49 abut the ends 21 of the front cross-member 15 of the sub-frame to determine the fully lowered position. If appropriate rubber buffers may be interposed between the members 49 and the tube ends 21. For the members 49, the respective free ends of the horizontal limbs have single bolt fastenings to the structure of the load platform, whilst the respective free ends of the vertical limbs are secured to a top rail of the headboard assembly. Instead of being tubular steel members, the members 49 could be of pressed steel or aluminium extrusions.

A steel or aluminium panel 54 is secured by screws or bolts to the upright regions of the members 49 to define the transversely extending front wall of the load platform 11. The panel 54 is formed by a pressing, or rolling operation which provides within the panel longitudinally extending ribs 55 which enhance the rigidity of the panel. Pressed steel or extruded aluminium end channels 56 are engaged with the opposite ends respectively of the panel 54, the width of the channel being sufficient to accept the ribbing of the panel 54, and the channels 56 being secured to the panel 54 by screws, bolts, or similar fastenings. A decorative top rail 57 is secured to and spans the upper free ends of the members 49 and protrudes beyond the members 49 in a lateral direction to engage the upper ends of decorative capping strips 58 secured to the end channels 56 and extending upwardly therefrom. The capping strips 58 and the top rail 57 are secured together, and to the remainder of the headboard assembly by screws or the like, and define a framework for supporting, for example, a metal mesh component formed from welded metal wire, which fills the space between the upper edge of the panel 54, the end caps 58 and the top rail 57. It will be recognised that load imposed upon the headboard assembly, in a direction towards the cab of the vehicle, is accepted by the members 49, and through them, the structural skeleton of the load platform 11.

The drop sides 46 of the load platform 11 are secured in a raised position by latch components cooperating with keeps on the end channels 56 and the upright posts 47 respectively. The width of the end channels 56 allows the keeps to be accommodated within the depth of the end channels 56 so that when the drop sides 46 are lowered the keeps of the end channels 56 do not protrude into the area of access to the load platform which is provided by dropping the drop sides 46.

It will be recognised that the tipper body described above embodies numerous features of distinction over the known conventional tipper bodies. It is to be understood that these features may be used together, in combination as described above, but also may be used individually of one another where an application so dictates. For example, the headboard assembly 48 with L-shaped members 49 described above, is capable of use on a fixed bed, i.e. non-tipping, load platform if desired. The manner of mounting the load platform to the sub-frame through the intermediary of the projecting tube portions 21 and brackets 23 can be utilised on other forms of tipper body as can the manner in which the scissor lift mechanism 13 is anchored to the load platform 11. Similarly, these features although desirably are used in conjunction with a sub-frame 12 as described above, it is to be understood that such features, and indeed the sub-frame construction, can be used independently of one another.

## Claims

1. A body for attachment to a vehicle cab and chassis assembly, the body comprising a load deck having its end nearest the cab, in use, in the form of an upstanding headboard, the headboard incorporating a first part of at least one structural member, said first part extending downwardly of the headboard to a lowermost part thereof, from which a further part of said at least one structural member extends underneath said load deck.

2. A body as claimed in Claim 1, wherein said headboard incorporates a cross-member at or adjacent said lowermost part thereof, to which is secured said first part of said at least one structural member.

3. A body as claimed in Claim 2, wherein said securement is by a U-shaped clamping bolt.

4. A body as claimed in any one of Claims 1 to 3, wherein said first part of said at least one structural member is secured to a cross-member of said headboard spaced upwardly from said lowermost part of the headboard.

5. A body as claimed in Claim 4, wherein said cross-member spaced upwardly from said lowermost part is a top rail of the headboard.

6. A body as claimed in any one of Claims 1 to 5, wherein the load deck incorporates a transverse/lateral member at the underside thereof, to which is secured directly or indirectly said second part of said at least one structural member.

7. A body as claimed in Claim 6, wherein said second part of said at least one structural member is secured to said transverse/lateral member at a position at or adjacent said lowermost part of the headboard.

8. A body as claimed in Claim 6 or Claim 7, wherein said securement to said transverse/lateral member is by a U-shaped clamping bolt.

9. A body as claimed in any one of Claims 1 to 8, wherein a free end of said second part has a single bolt fastening to the load deck structure.

10. A body as claimed in any one of the preceding claims, wherein the structural member is L-shaped.

11. A body as claimed in any one of the preceding claims, wherein the structural member is of tubular steel.

12. A body as claimed in any one of the preceding claims, comprising a pair of structural members laterally spaced apart and parallel to one another.

13. A body as claimed in any one of Claims 1 to 13, wherein the body comprises a sub-frame, for securement to the vehicle cab and chassis assembly, in use, to which sub-frame the load deck is attached.

14. A body as claimed in Claim 13, wherein the load deck is tippable, in use, relative to the sub-frame, about pivot means.

15. A vehicle including a body as claimed in any one of Claims 1 to 14.

16. A body for attachment to a vehicle cab and chassis assembly, the body comprising a sub-frame, for securement to the chassis, in use, and a load deck tippable, in use, relative to the sub-frame, about pivot means, the sub-frame including a pair of spaced longitudinal members interconnected by respective front and rear cross-members, the rear cross-member extending through said longitudinal members with its respective opposite ends protruding therebeyond, and said pivot means being provided by respective bearing assemblies fitted to said respective protruding ends and connected directly or indirectly to said load deck.

17. A body as claimed in Claim 16, wherein the rear cross-member is provided along its length with a pair of spaced apart location members, the longitudinal members engaging, and being secured to, said location members, respectively, the spacing apart of the location members thereby determining the width of the sub-frame.

18. A body as claimed in Claim 16 or Claim 17, wherein each of the longitudinal members is formed with a plurality of fixing holes along its length for the connection, at selected ones of the fixing holes respectively, of brackets which are connected, in use, to a corresponding, selected vehicle chassis.

19. A body as claimed in any one of Claims 16 to 18, wherein each bearing assembly includes a bearing surface within a bracket which receives the protruding end, the bracket having means for its direct or indirect connection to said load deck.

20. A body as claimed in Claim 19, wherein the bracket comprises a hollow, part-cylindrical boss, in which is defined the bearing surface, and at least one flange constituting said means for its direct or indirect connection to the load deck.

21. A body as claimed in Claim 20, wherein the bearing surface is formed at the interior of a bearing sleeve in which said protruding end of the rear cross-member is received.

22. A body as claimed in Claim 21, wherein the bearing sleeve is a sliding fit on said protruding end of the rear cross-member.

23. A body as claimed in Claim 21 or Claim 22, wherein the bearing sleeve is a press-fit within said bracket.

24. A body as claimed in any one of Claims 20 to 23, wherein respective end caps are fitted in respective ends of said rear cross-member.

25. A body as claimed in any one of Claims 19 to 24, wherein each bracket is a metal extrusion.

26. A body for attachment to a vehicle cab and chassis assembly, the body comprising a sub-frame, for securement to the chassis, in use, a load deck tippable, in use, relative to the sub-frame, about pivot means, and a lifting mechanism connected between the sub-frame and the load deck to effect said tipping, in use, the connection of the lifting mechanism to the load deck being by way of a horizontally pivoted member of the lifting mechanism being retained in a recess or groove in part of the load deck.

27. A body as claimed in Claim 26, wherein the lifting mechanism is of scissor lift form comprising pivotally connected upper and lower limbs, with said horizontally pivoted member being horizontally pivoted to said upper limb at a free end thereof.

28. A body as claimed in Claim 27, wherein the upper limb comprises two interconnected parallel strips between which said member retained in said recess or groove is pivoted.

29. A body as claimed in any one of Claims 26 to 28, wherein said recess or groove is in a cross-member of the load deck.

30. A body as claimed in Claim 29, wherein the member is retained in said recess or groove by a locking plate secured to said cross-member.

31. A body as claimed in any one of Claims 26 to 30, wherein the member retained in said recess or groove is a cylindrical component.

32. A body as claimed in any one of Claims 26 to 31, wherein the lifting mechanism is connected to the sub-frame at an intermediate cross-member thereof.

33. A body as claimed in Claim 28, wherein each strip is a metal pressing having an integral strengthening flange along a lower edge thereof.

34. A vehicle including a body as claimed in any one of Claims 16 to 33.
